# EUROPEAN PATENT APPLICATION

(11) **EP 4 662 998 A1**
(43) Date of publication of application: **17.12.2025**
(21) Application number: 25172118.9
(22) Date of filing: 24.04.2025
(51) Int. Cl.: A01D 34/00, A01D 75/28, A01D 101/00, A01B 69/04, G05D 105/15

(54) **A ROBOTIC LAWN MOWER WITH ENHANCED CUTTING PROPERTIES IN SLOPES**

(30) Priority: 24.05.2024 SE 2450560
(71) Applicant: Husqvarna AB, 561 82 Huskvarna (SE)
(72) Inventor: Sigurdarson, Logi, Huskvarna (SE); Eliasson, Hans, Huskvarna (SE); Alvin, Axel, Huskvarna (SE); Fröling, Douglas, Huskvarna (SE); Kara, Dilen, Huskvarna (SE)

(57) **Abstract**

The present disclosure relates to a robotic lawn mower (100) comprising a control unit (110) adapted to control the operation of the robotic lawn mower (100), where a first end portion (101) is facing a forward travelling direction (F) and a second end portion (102) is facing a rearward travelling direction (R). When the robotic lawn mower (100) shall change cutting lanes form a first cutting lane (208A) to an adjacent second cutting lane (208B), the robotic lawn mower (100) is controlled to turn such that the second end portion (102) faces the second cutting lane (208B) to a larger extent than the first end portion (101), and to move in the rearward travelling direction (R), towards the second cutting lane (208B). The robotic lawn mower (100) is further controlled to be positioned to perform grass cutting in the forward travelling direction (F) in the second cutting lane (208B), and to perform grass cutting in the forward travelling direction (F) in the second cutting lane (208B). The cutting lanes (208A, 208B) have a first inclination (α) in a direction perpendicular to main lane extensions (L_{A}, L_{B}) and a second inclination (β) along the main lane extensions (L_{A}, L_{B}), which second inclination (β) falls below the first inclination (α), and where the second cutting lane (208B) runs below the first cutting lane (208A).

## Description

### TECHNICAL FIELD

The present disclosure relates to a robotic lawn mower that comprises a control unit adapted to control the operation of the robotic lawn mower, and at least one rotatable grass cutting disc having a rotation axis.

### BACKGROUND

Robotic lawn mowers, such as for example robotic lawn mowers, are becoming increasingly more popular. A robotic lawn mower is usually battery-powered by means of a rechargeable battery and is adapted to cut grass on a user's lawn automatically. A robotic lawn mower can be charged automatically without intervention of the user and does normally not need to be manually managed after being set once.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

A lawn is commonly mowed systematically when mowed manually, but doing this autonomously with full lawn coverage has been a tedious task to solve. The introduction of different high accuracy positioning systems has made this task easier, and more and more autonomous lawn mowers have started to cut the lawn systematically. One common way of mowing a lawn systematically is to mow it in straight lines.

A problem associated with robotic lawn mowers is that when running systematic cutting in slopes, the robotic lawn mower tends to slip and wear the grass when turning. Further this can lead to significant slipping and conclude in a stop. Therefore, it is desired to reduce this unwanted behavior.

### SUMMARY

The object of the present disclosure is to provide means and methods for handling turns during systematic grass cutting in slopes.

This object is achieved by means of a robotic lawn mower comprising a control unit adapted to control the operation of the robotic lawn mower, and at least at least one rotatable grass cutting disc having a rotation axis. A first end portion is facing a forward travelling direction and a second end portion is facing a rearward travelling direction. When the robotic lawn mower is performing grass cutting in the forward direction in a first cutting lane having a first main lane extension in an operation area, and shall change cutting lanes to a second cutting lane that has a second main lane extension and runs adjacent to the first cutting lane, the control unit is adapted to control the robotic lawn mower to turn such that the second end portion faces the second cutting lane to a larger extent than the first end portion, and to control the robotic lawn mower to move in the rearward travelling direction, towards the second cutting lane. The control unit is further adapted to control the robotic lawn mower to be positioned to perform grass cutting in the forward travelling direction in the second cutting lane, and to control the robotic lawn mower to perform grass cutting in the forward travelling direction in the second cutting lane.

The cutting lanes have a first inclination in a direction perpendicular to the main lane extensions and a second inclination along the main lane extensions, which second inclination falls below the first inclination, and where the second cutting lane runs below the first cutting lane.

This way, when the robotic lawn mower is performing systematic cutting in a slope and is about to change cutting lanes to an adjacent cutting lane that runs at a lower level in the slope, the risk that the robotic lawn mower tends to slip and wear the grass when turning is reduced.

According to some aspects, the control unit is adapted to control the robotic lawn mower to turn such that the second end portion faces the second cutting lane to a larger extent than the first end portion by controlling the robotic lawn mower to continue moving in the forward travelling direction and at the same time to turn away from the first cutting lane and the second cutting lane.

According to some aspects, the control unit is adapted to control the robotic lawn mower to turn such that the second end portion faces the second cutting lane to a larger extent than the first end portion by controlling the robotic lawn mower to perform a rotational movement such that the first end portion turns away from the second cutting lane.

According to some aspects, the control unit is adapted to control the robotic lawn mower to be positioned to perform grass cutting in the forward travelling direction in the second cutting lane by controlling the robotic lawn mower to continue moving in the rearward travelling direction and either control the robotic lawn mower
- to turn at the same time such that the robotic lawn mower is positioned to perform grass cutting in the forward travelling direction in the second cutting lane, or
- when reaching the second cutting lane, to perform a rotational movement such that the first end portion faces the second cutting lane and such that the robotic lawn mower is positioned to perform grass cutting in the forward travelling direction in the second cutting lane, or
- when having passed the second cutting lane, to move in the forward travelling direction and to turn at the same time such that the robotic lawn mower is positioned to perform grass cutting in the forward travelling direction in the second cutting lane.

This means that there are many ways to perform the inventive concept, providing a robotic lawn mower which supports systematic mowing and efficient lane changes between adjacent cutting lanes in a slope over and over again, as long as needed.

According to some aspects, the robotic lawn mower comprises a body, at least two drive wheels and at least one swivelable wheel, where the drive wheels are positioned closer to the second end portion than said swivelable wheel.

This enables the robotic lawn mower to perform rotational movements by driving the drive wheels in different rotation directions.

According to some aspects, the control unit is adapted to control the robotic lawn mower by means of input derived from a navigation sensor arrangement and/or at least one environment detection device comprised in the robotic lawn mower.

This means that the robotic lawn mower can be positioned for performing a lane change according to the above directly, without first having to detect a boundary wire.

According to some aspects, the navigation sensor arrangement comprises at least one of satellite signal navigation sensors, and deduced reckoning sensors.

According to some aspects, the navigation sensor arrangement comprises deduced reckoning sensors that include visual sensors for Simultaneous Localization And Mapping (SLAM) navigation.

According to some aspects, the navigation sensor arrangement is adapted for navigation by means of active local radio beacons using Ultra Wide Band (UWB).

This means that the navigation sensor arrangement can be formed in many different ways. In some embodiments the deduced reckoning sensors include visual sensors, such as for Simultaneous Localization And Mapping, SLAM, navigation or other visual navigation.

According to some aspects, the robotic lawn mower comprises at least one environment detection device adapted to detect objects, where said environment detection device comprises at least one of a radar transceiver, a camera device, an ultrasonic device, a Lidar device, and/or a boundary wire sensor.

This object is also achieved by means of methods, control unit arrangements and computer program products that are associated with above advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

The present disclosure will now be described more in detail with reference to the appended drawings, where:
- Figure 1: shows a top view of a robotic lawn mower;
- Figure 2: shows a schematic overview of the robotic lawn mower;
- Figure 3A: shows a schematic back view of the robotic lawn mower in a slope;
- Figure 3B: shows a schematic side view of the robotic lawn mower in the slope;
- Figure 4-8: show a schematic top view of robotic lawn mower actions during cutting lane change according to a first example;
- Figure 9-15: show a schematic top view of robotic lawn mower actions during cutting lane change according to a second example and a third example;
- Figure 16: shows a schematic top view of a robotic lawn mower system;
- Figure 17: shows a computer program product; and
- Figure 18: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

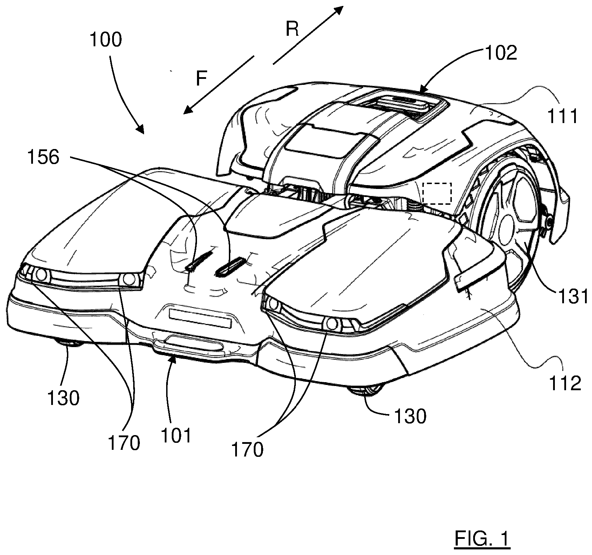

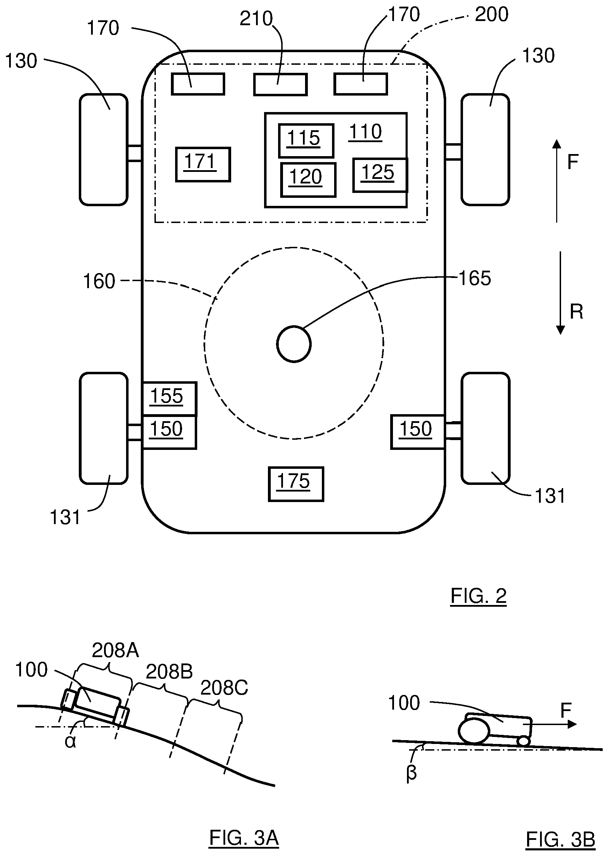

Figure 1 shows a top view of a robotic lawn mower 100 and Figure 2 shows a schematic overview of the robotic lawn mower 100.

The robotic lawn mower comprises a control unit 110 adapted to control the operation of the robotic lawn mower 100, and at least one rotatable grass cutting disc 160 having a rotation axis 152, where a first end portion 101 is facing a forward travelling direction F and a second end portion 102 is facing a reverse or rearward travelling direction R.

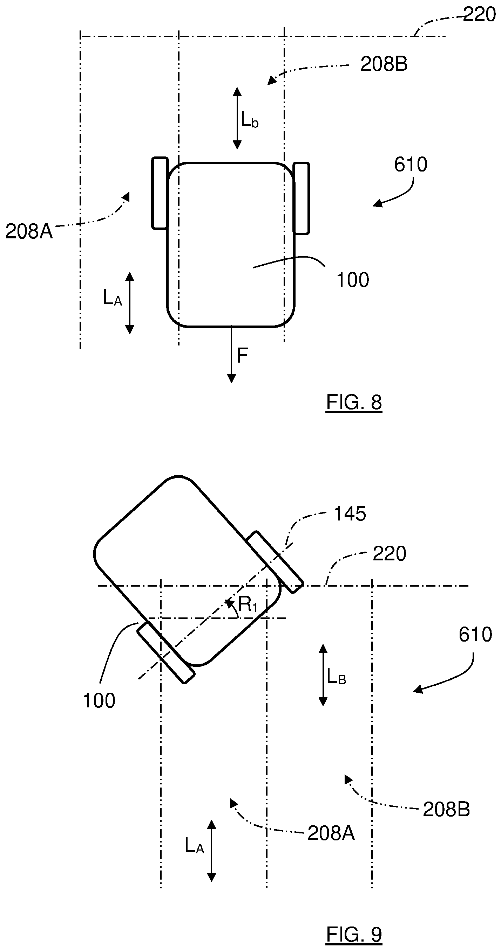

According to some aspects, with reference also to Figure 9, 10 and Figure 12, the robotic lawn mower 100 comprises a body 111, 112 and at least two drive wheels 131 arranged along a drive wheel axis 145. According to some further aspects, the robotic lawn mower 100 further comprises at least one swivelable wheel 130. The drive wheel axis 145 is an imaginary axis, not being constituted by a physical axle that connects the drive wheels 131.

According to some aspects, the robotic lawn mower 100 comprises four wheels, two larger drive wheels 131 and two smaller swivelable wheels 130 that are in form of castor wheels and are arranged to swivel around a corresponding swivel axis when the robotic lawn mower 100 is turning.

The robotic lawn mower 100 may be a multi-chassis type or a mono-chassis type. A multi-chassis type comprises two or more body parts that are movable with respect to one another, in this example there are two body parts 111, 112. A mono-chassis type comprises only one main body part.

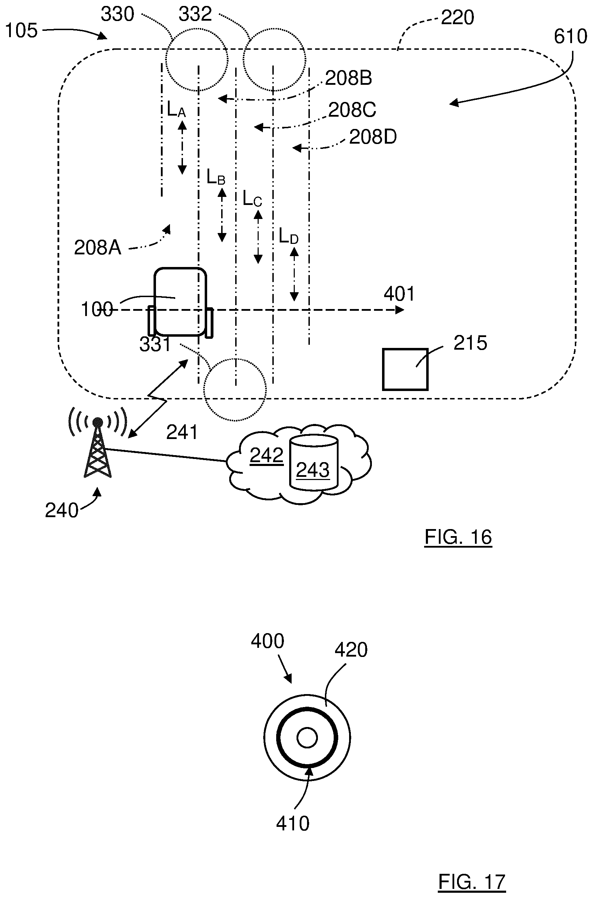

According to some aspects, the robotic lawn mower 100 also comprises at least two electric motor arrangements 150, 165 (only schematically indicated in Figure 2) and at least one rechargeable electric power source such as a battery 155 (only schematically indicated in Figure 1) for providing power to the electric motor arrangements 150, 165. The battery 155 is arranged to be charged by means of received charging current from a charging station 215 as indicated in Figure 16, received through charging skids 156 or other suitable charging connectors. Inductive charging without galvanic contact, only by means of electric contact, is also conceivable. The battery is generally constituted by a rechargeable electric power source 155 that comprises one or more batteries that can be separately arranged or be arranged in an integrated manner to form a combined battery.

The drive wheels 131 are according to some aspects drivably connected to a first electric motor arrangement 150, where the first electric motor arrangement 150 is adapted to drive the drive wheels 131 in the same rotation direction or in different rotation directions, at the same rotational speed or at different rotational speeds. According to some aspects, the first electric motor arrangement 150 comprises a separate electrical motor for each drive wheel 131, and according to some further aspects each such electric motor is mounted to a corresponding drive wheel 131, for example in a corresponding drive wheel hub.

According to some aspects, the drive wheels 131 are positioned closer to the second end portion 102 than said swivelable wheel 130, which means that the robotic lawn mower 100 is driven by its rear-wheels 131.

As shown in Figure 3A and Figure 3B, the robotic lawn mower 100 is performing grass cutting in the forward direction F in a first cutting lane 208A having a first main lane extension L_{A} in an operation area 610, and there is a second cutting lane 208B that has a second main lane extension L_{B} and runs adjacent to the first cutting lane 208A.

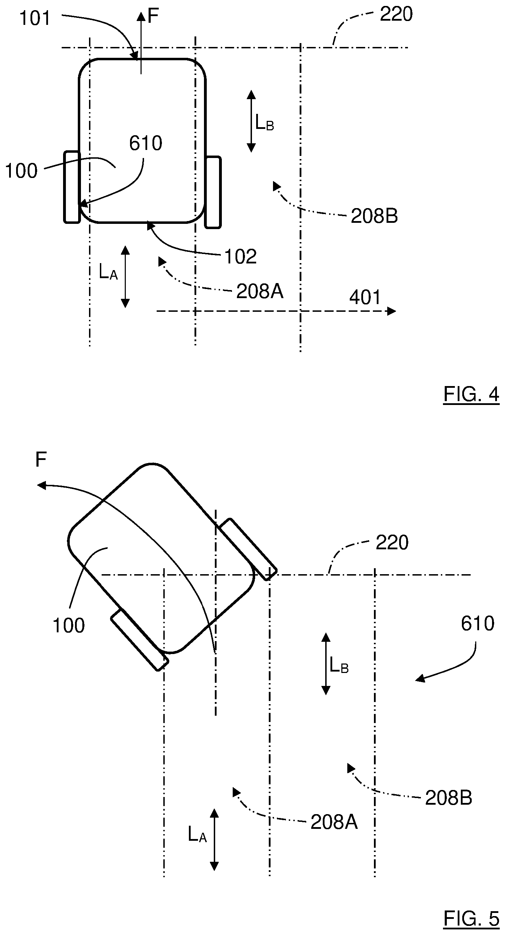

With reference to Figure 4 - Figure 8, when the robotic lawn mower 100 shall change cutting lanes to from the first cutting lane 208A to the second cutting lane 208B, the control unit 110 is adapted to control the robotic lawn mower 100 to turn such that the second end portion 102 faces the second cutting lane 208B to a larger extent than the first end portion 101, and to control the robotic lawn mower 100 to move in the rearward travelling direction R, towards the second cutting lane 208B. Furthermore, the control unit 110 is adapted to control the robotic lawn mower 100 to be positioned to perform grass cutting in the forward travelling direction F in the second cutting lane 208B, and to control the robotic lawn mower 100 to perform grass cutting in the forward travelling direction F in the second cutting lane 208B as shown in Figure 8

With reference also to Figure 3A and Figure 3B, the cutting lanes 208A, 208B have a first inclination α in a direction perpendicular to the main lane extensions L_{A}, L_{B} and a second inclination β along the main lane extensions L_{A}, L_{B}, which second inclination β falls below the first inclination α, and where the second cutting lane 208B runs below the first cutting lane 208A.

This means that the lanes 208A, 208B and further lanes 208C runs in a slope, where the lane change/changes is/are performed from a higher lane to a lower lane, where the lower lane is positioned lower in the slope than the higher lane, and this is indicated in Figure 4 and Figure 16 with a dashed arrow 401 that points from a higher position to a lower position in a slope and can be regarded to indicate a main inclination. According to some aspects, the lanes 208A, 208B, 208C run mainly perpendicular to a main inclination 401, for example perpendicular within an angel span of ±10°.

This way, when the robotic lawn mower is performing systematic cutting in a slope and is about to change cutting lanes to an adjacent cutting lane that runs at a lower level in the slope, the risk that the robotic lawn mower tends to slip and wear the grass when turning is reduced.

Some of the above movement above can be performed in different ways as will be illustrated in three examples below.

According to some aspects, as illustrated for a first example in Figure 5-7, the control unit 110 is adapted to control the robotic lawn mower 100 to turn such that the second end portion 102 faces the second cutting lane 208B to a larger extent than the first end portion 101 by controlling the robotic lawn mower 100 to continue moving in the forward travelling direction F and at the same time to turn away from the first cutting lane 208A and the second cutting lane 208B, as shown in Figure 5.

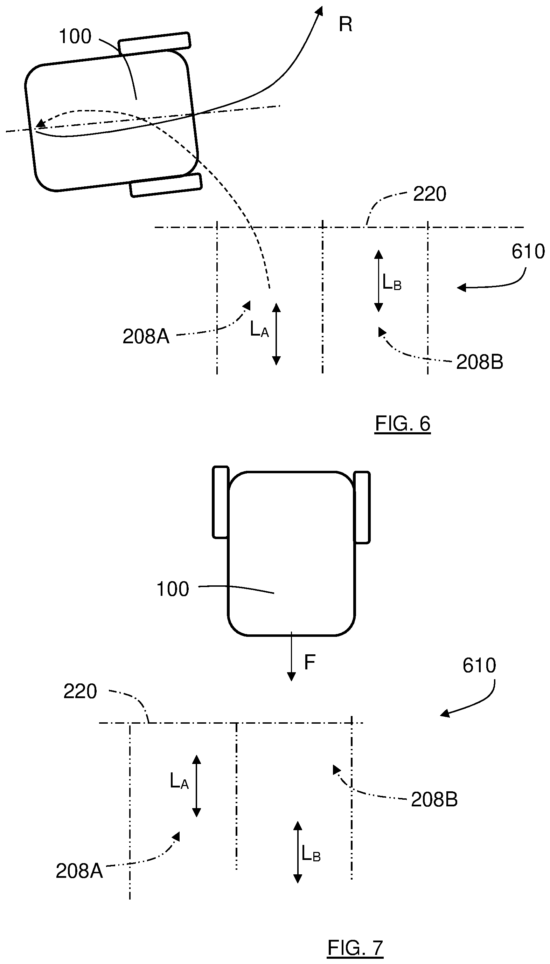

Furthermore, the control unit 110 is adapted to control the robotic lawn mower 100 to be positioned to perform grass cutting in the forward travelling direction F in the second cutting lane 208B by controlling the robotic lawn mower 100 to continue moving in the rearward travelling direction R and to turn at the same time, as shown in Figure 6, such that the robotic lawn mower 100 is positioned to perform grass cutting in the forward travelling direction F in the second cutting lane 208B as shown in Figure 7.

According to some aspects, as illustrated for a second example and a third example in Figure 9-10, the control unit 110 is adapted to control the robotic lawn mower 100 to turn such that the second end portion 102 faces the second cutting lane 208B to a larger extent than the first end portion 101 by controlling the robotic lawn mower 100 to perform a rotational movement R₁, R₂ such that the first end portion 101 turns away from the second cutting lane 208B. The rotational movement R₁, R₂ is suitably achieved by driving the drive wheels 131 in different rotation directions, and is according to some aspects of the magnitude 100°-150°.

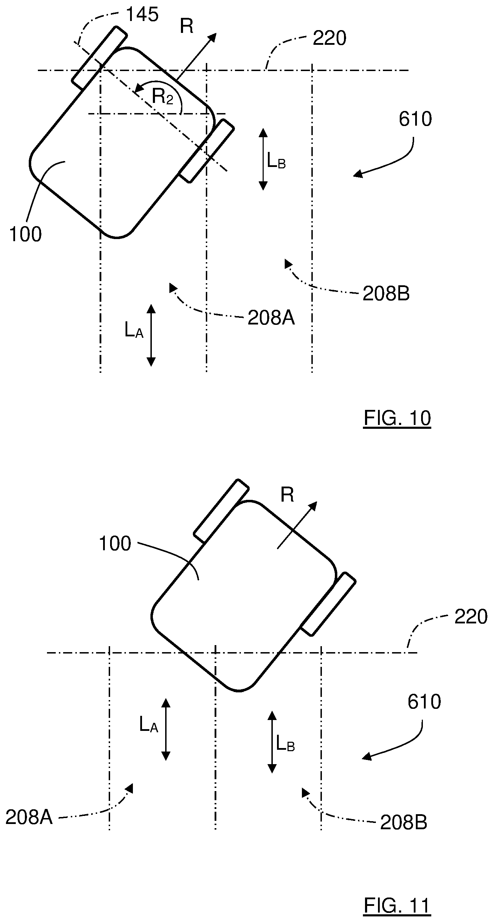

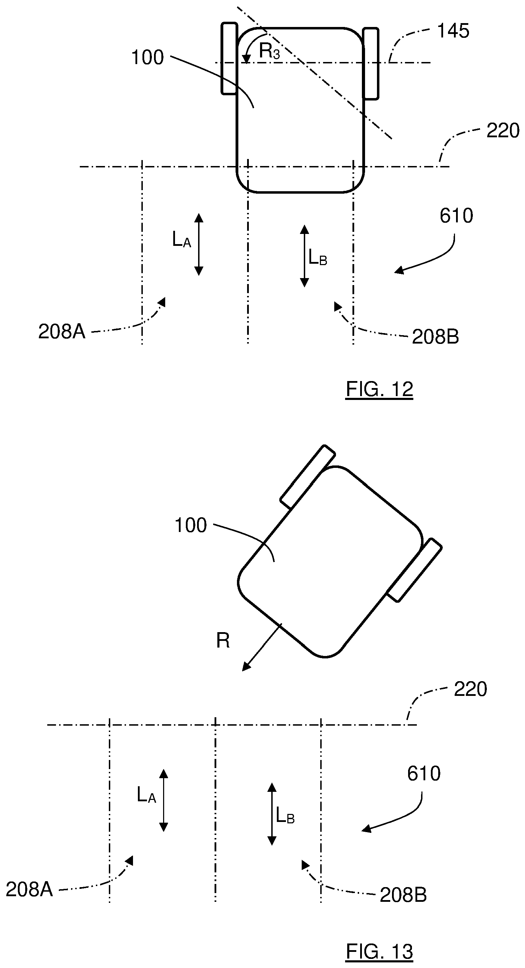

Furthermore, according to the second example, the control unit 110 is adapted to control the robotic lawn mower 100 to be positioned to perform grass cutting in the forward travelling direction F in the second cutting lane 208B by controlling the robotic lawn mower 100 to continue moving in the rearward travelling direction R until reaching the second cutting lane 208B as illustrated in Figure 11. Then, as illustrated in Figure 12, the control unit 110 is adapted to control the robotic lawn mower 100 to perform a rotational movement R₃ such that the first end portion 101 faces the second cutting lane 208B and such that the robotic lawn mower 100 is positioned to perform grass cutting in the forward travelling direction F in the second cutting lane 208B. The rotational movement R₃ is suitably achieved by driving the drive wheels 131 in different rotation directions, and is according to some aspects of the magnitude 20°-70°.

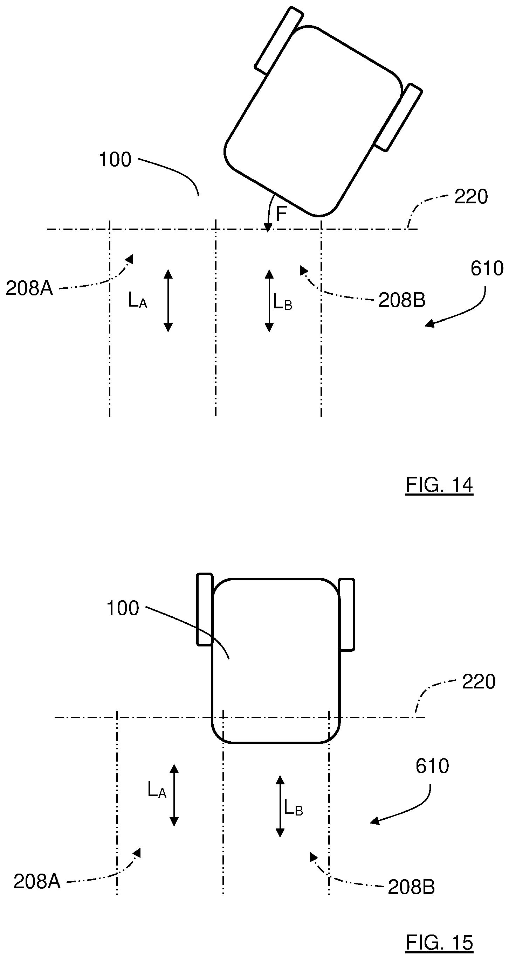

Alternatively, according to the third example, the control unit 110 is adapted to control the robotic lawn mower 100 to be positioned to perform grass cutting in the forward travelling direction F in the second cutting lane 208B by controlling the robotic lawn mower 100 to continue moving in the rearward travelling direction R until reaching the second cutting lane 208B as illustrated in Figure 11, and then continuing. Then, as illustrated in Figure 13-14, when having passed the second cutting lane 208B, the control unit 110 is adapted to control the robotic lawn mower 100 to move in the forward travelling direction F and to turn at the same time such that the robotic lawn mower 100 is positioned to perform grass cutting in the forward travelling direction F in the second cutting lane 208B as shown in Figure 15.

The lane change may for example be initiated when the control unit 110 determines that the robotic lawn mower 100 is approaching a lawn end 220, where the lawn end 220 can be in the form of a boundary for the operation area 610, or be determined in relation to such a boundary. Such a boundary can for example be defined by a boundary wire or be in the form of a virtual boundary.

Several examples have described above, where, according to some aspects an inventive concept lies in that when the robotic lawn mower 100 shall change from one cutting lane to another, intended, cutting lane in a slope, running at a lower level in the slope, the robotic lawn mower 100 is controlled to be positioned in a suitable manner and then move rearwards towards the intended cutting lane, and finally to be positioned for cutting in the intended cutting lane.

In this manner, a robotic lawn mower 100 is provided which supports systematic mowing and efficient lane changes between cutting lanes in a slope over and over again, as long as needed. This is also illustrated in Figure 16 where the robotic lawn mower 100 is comprised in a robotic lawn mower system 105 and moves in straight lines in adjacent cutting lanes 208A-208D, along corresponding main lane extensions L_{A} - L_{D}. At each lane end 220 (or boundary 220), lane change 330, 331, 332 (only schematically indicated) is performed as described above. In Figure 16, the lane end is the boundary, but this is as mentioned above not necessary. Suitably, the lane end 220 can be derived from information regarding the boundary. The boundary can be inclined relative the lane end 220.

It should be noted that in Figure 3A, three adjacent cutting lanes 208A, 208B, 208C are shown, in Figure 4-15 two adjacent cutting lanes 208A, 208B are shown, and in Figure 16 four adjacent cutting lanes 208A, 208B, 208C, 208D are shown. These are of course only examples, there may be any suitable number of adjacent cutting lanes in a slope having a main inclination 401 where the robotic lawn mower 100 can perform the efficient lane changes as described herein repeatedly, as long as needed.

According to some aspects, the control unit 110 is adapted to position the robotic lawn mower 100 by means of input derived from a navigation sensor arrangement 175 and/or at least one environment detection device 170, 171, 173 comprised in the robotic lawn mower 100.

This means that the robotic lawn mower can be positioned for performing a lane change according to the above directly, without first having to detect a boundary wire.

According to some aspects, the navigation sensor arrangement 175 comprises at least one of
- satellite signal navigation sensor 175a; and
- deduced reckoning sensors 175b.

The deduced reckoning sensors 175b may be odometers, accelerometers or other deduced reckoning sensors.

According to some aspects, the navigation sensor arrangement 175 comprises deduced reckoning sensors 175b that include visual sensors for Simultaneous Localization And Mapping, SLAM, navigation.

According to some aspects, the navigation sensor arrangement 175 is adapted for navigation by means of active local radio beacons using Ultra Wide Band, UWB.

This means that the navigation sensor arrangement 175 can be formed in many different ways. In some embodiments the deduced reckoning sensors 175b include visual sensors, such as for Simultaneous Localization And Mapping, SLAM, navigation or other visual navigation. In such embodiments a boundary may be bounded by reference objects, not shown explicitly in any Figure, but deemed to be included in the boundary.

In some embodiments, the deduced reckoning sensors 175b are comprised in the propulsion device, wherein a deduced reckoning navigation may be provided by knowing the current supplied to a motor and the time the current is supplied, which will give an indication of the speed and thereby distance for the corresponding wheel.

The deduced reckoning sensors 175b, especially in combination with the visual odometry sensor, enables the root to operate according to a map of the operational area. In some such embodiments, the navigation is based on SLAM, and in some embodiments, where a visual odometry sensor, such as a camera, is utilized, the navigation is based on V-SLAM.

According to some aspects, the robotic lawn mower 100 comprises at least one environment detection device 170, 171, 173 adapted to detect objects, where said environment detection device 170, 171, 173 comprises at least one of
- a radar transceiver 170, 171,
- a camera device,
- an ultrasonic device,
- a Lidar device, and/or
- a boundary wire sensor 173.

As indicated in Figure 16, according to some aspects, the control unit 110 may be adapted to be in contact, suitably by means of wireless communication 241, with external units, for example a communication system 240. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

It is also appreciated that some processing functions may be performed by resources in a remote network 242, such as a remote server 243.

The control unit 110 may be constituted by one or more control unit parts that can be separate from each other. Some or all control unit parts may be comprised in a control unit arrangement 110 and/or a remote server 243.

In Figure 2 it is schematically illustrated, in terms of a number of functional units, the components of the control unit 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry thus comprises a plurality of digital logic components.

Particularly, the processing circuitry 115 is configured to cause the control unit 110 to perform a set of operations, or steps to control the operation of the robotic lawn mower 100 including, but not being limited to, controlling the radar transceivers 170, processing measurements results received via the radar transceivers 170, and the propulsion of the robotic lawn mower 100. For example, the storage medium 120 may store the set of operations, and the processing circuitry 115 may be configured to retrieve the set of operations from the storage medium 120 to cause the control unit 110 to perform the set of operations. The set of operations may be provided as a set of executable instructions. Thus, the processing circuitry 115 is thereby arranged to execute at least parts of the methods as herein disclosed.

The storage medium 120 may also comprise persistent storage, which, for example, can be any single one or combination of magnetic memory, optical memory, solid state memory or even remotely mounted memory.

According to some aspects, the control unit 110 further comprises an interface 125 for communications with at least one external device such as a user terminal, the remote server 243 and/or a charging station 215. As such, the interface 125 may comprise one or more transmitters and receivers, comprising analogue and digital components and a suitable number of ports for wireline communication. The interface 125 can be adapted for communication with other devices, such as the remote server 243, a charging station 215, and/or other robotic lawn mowers. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as herein disclosed.

Generally, the present disclosure relates to a control unit arrangement 110 that is adapted to execute any of the methods disclosed herein.

Figure 17 shows a computer program product 400 comprising computer executable instructions 410 stored on media 420 to execute any of the methods disclosed herein.

Generally, the present disclosure relates to a computer program product 400 comprising computer executable instructions 410 stored on media 420 to execute the methods as described herein.

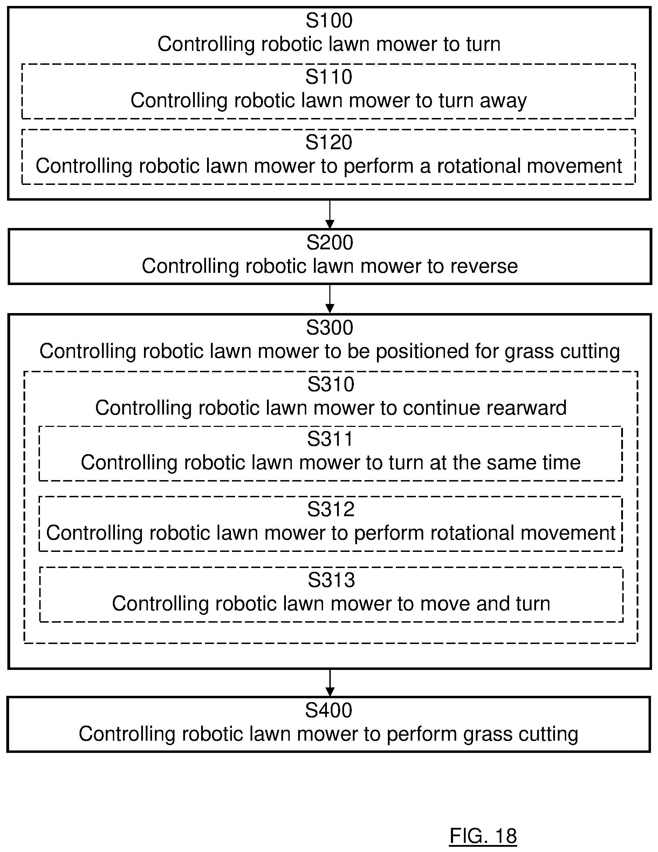

With reference to Figure 18, the present disclosure also relates to a method for controlling a robotic lawn mower 100 having a first end portion 101 facing a forward travelling direction F and a second end portion 102 facing a rearward travelling direction R. When the robotic lawn mower 100 is performing grass cutting in the forward direction F in a first cutting lane 208A having a first main lane extension L_{A} in an operation area 610, and shall change cutting lanes to a second cutting lane 208B that has a second main lane extension L_{B} and runs adjacent to the first cutting lane 208A, the method comprises controlling S100 the robotic lawn mower 100 to turn such that the second end portion 102 faces the second cutting lane 208B to a larger extent than the first end portion 101, and controlling S200 the robotic lawn mower 100 to move in the rearward travelling direction R, towards the second cutting lane 208B.

The method further comprises controlling S300 the robotic lawn mower 100 to be positioned to perform grass cutting in the forward travelling direction F in the second cutting lane 208B, and controlling S400 the robotic lawn mower 100 to perform grass cutting in the forward travelling direction F in the second cutting lane 208B.

The cutting lanes 208A, 208B have a first inclination α in a direction perpendicular to the main lane extensions L_{A}, L_{B} and a second inclination β along the main lane extensions L_{A}, L_{B}, which second inclination β falls below the first inclination α, and where the second cutting lane 208B runs below the first cutting lane 208A.

According to some aspects, controlling S100 the robotic lawn mower 100 to turn such that the second end portion 102 faces the second cutting lane 208B to a larger extent than the first end portion 101 comprises controlling S110 the robotic lawn mower 100 to continue moving in the forward travelling direction F and at the same time to turn away from the first cutting lane 208A and the second cutting lane 208B.

According to some aspects, controlling S100 the robotic lawn mower 100 to turn such that the second end portion 102 faces the second cutting lane 208B to a larger extent than the first end portion 101 comprises controlling S120 the robotic lawn mower 100 to perform a rotational movement R₁, R₂ such that the first end portion 101 turns away from the second cutting lane 208B.

According to some aspects, the method comprises controlling S300 the robotic lawn mower 100 to be positioned to perform grass cutting in the forward travelling direction F in the second cutting lane 208B by controlling S310 the robotic lawn mower 100 to continue moving in the rearward travelling direction R and either:
- Controlling S311 the robotic lawn mower 100 to turn at the same time such that the robotic lawn mower 100 is positioned to perform grass cutting in the forward travelling direction F in the second cutting lane 208B; or
- when reaching the second cutting lane 208B, controlling S312 the robotic lawn mower 100 to perform a rotational movement R₃ such that the first end portion 101 faces the second cutting lane 208B and such that the robotic lawn mower 100 is positioned to perform grass cutting in the forward travelling direction F in the second cutting lane 208B; or
- when having passed the second cutting lane 208B, controlling S313 the robotic lawn mower 100 to move in the forward travelling direction F and to turn at the same time such that the robotic lawn mower 100 is positioned to perform grass cutting in the forward travelling direction F in the second cutting lane 208B.

According to some aspects, an end portion 101, 102 can be defined as a rearmost of foremost point at the robotic lawn mower 100. According to some aspects, the first end portion 101 is a foremost point at the robotic lawn mower 100, facing the forward travelling direction F, and the second end portion 102 is a rearmost point at the robotic lawn mower 100, facing the rearward travelling direction R. According to some aspects, the first end portion 101 is opposite the second end portion 102.

According to some aspects, the rotational movements R₁, R₂, R₃ can be regarded as arcuate movements. During lane change, the cutting disc 160 may either be operational or disengaged, partly or completely.

According to some aspects, the inclinations α, β can be defined as angles relative a horizontal level or plane.

## Claims

1. A robotic lawn mower (100) comprising a control unit (110) adapted to control the operation of the robotic lawn mower (100), and at least one rotatable grass cutting disc (160) having a rotation axis (152), where a first end portion (101) is facing a forward travelling direction (F) and a second end portion (102) is facing a rearward travelling direction (R), wherein, when the robotic lawn mower (100) is performing grass cutting in the forward direction (F) in a first cutting lane (208A) having a first main lane extension (L_{A}) in an operation area (610), and shall change cutting lanes to a second cutting lane (208B) that has a second main lane extension (L_{B}) and runs adjacent to the first cutting lane (208A), the control unit (110) is adapted to
- control the robotic lawn mower (100) to turn such that the second end portion (102) faces the second cutting lane (208B) to a larger extent than the first end portion (101),
- control the robotic lawn mower (100) to move in the rearward travelling direction (R), towards the second cutting lane (208B),
- control the robotic lawn mower (100) to be positioned to perform grass cutting in the forward travelling direction (F) in the second cutting lane (208B), and to
- control the robotic lawn mower (100) to perform grass cutting in the forward travelling direction (F) in the second cutting lane (208B),
where the cutting lanes (208A, 208B) have a first inclination (α) in a direction perpendicular to the main lane extensions (L_{A}, L_{B}) and a second inclination (β) along the main lane extensions (L_{A}, L_{B}), which second inclination (β) falls below the first inclination (α), and where the second cutting lane (208B) runs below the first cutting lane (208A).

2. The robotic lawn mower (100) according to claim 1, wherein the control unit (110) is adapted to control the robotic lawn mower (100) to turn such that the second end portion (102) faces the second cutting lane (208B) to a larger extent than the first end portion (101) by controlling the robotic lawn mower (100) to continue moving in the forward travelling direction (F) and at the same time to turn away from the first cutting lane (208A) and the second cutting lane (208B).

3. The robotic lawn mower (100) according to claim 1, wherein the control unit (110) is adapted to control the robotic lawn mower (100) to turn such that the second end portion (102) faces the second cutting lane (208B) to a larger extent than the first end portion (101) by controlling the robotic lawn mower (100) to perform a rotational movement (R₁, R₂) such that the first end portion (101) turns away from the second cutting lane (208B).

4. The robotic lawn mower (100) according to any one of the claims 2 or 3, wherein the control unit (110) is adapted to control the robotic lawn mower (100) to be positioned to perform grass cutting in the forward travelling direction (F) in the second cutting lane (208B) by controlling the robotic lawn mower (100) to continue moving in the rearward travelling direction (R) and either control the robotic lawn mower (100)
- to turn at the same time such that the robotic lawn mower (100) is positioned to perform grass cutting in the forward travelling direction (F) in the second cutting lane (208B), or
- when reaching the second cutting lane (208B), to perform a rotational movement (R₃) such that the first end portion (101) faces the second cutting lane (208B) and such that the robotic lawn mower (100) is positioned to perform grass cutting in the forward travelling direction (F) in the second cutting lane (208B), or
- when having passed the second cutting lane (208B), to move in the forward travelling direction (F) and to turn at the same time such that the robotic lawn mower (100) is positioned to perform grass cutting in the forward travelling direction (F) in the second cutting lane (208B).

5. The robotic lawn mower (100) according to any one of the previous claims, wherein the robotic lawn mower (100) comprises a body (111, 112), at least two drive wheels (131) and at least one swivelable wheel (130), where the drive wheels (131) are positioned closer to the second end portion (102) than said swivelable wheel (130).

6. The robotic lawn mower (100) according to any one of the previous claims, wherein the control unit (110) is adapted to control the robotic lawn mower (100) by means of input derived from a navigation sensor arrangement (175) and/or at least one environment detection device (170, 171, 173) comprised in the robotic lawn mower (100).

7. The robotic lawn mower (100) according to claim 6, wherein the navigation sensor arrangement (175) comprises at least one of
- satellite signal navigation sensors (175a); and
- deduced reckoning sensors (175b).

8. The robotic lawn mower (100) according to claim 7, wherein the navigation sensor arrangement (175) comprises deduced reckoning sensors (175b) that include visual sensors for Simultaneous Localization And Mapping, SLAM, navigation.

9. The robotic lawn mower (100) according to any one of the claims 6-8, wherein the navigation sensor arrangement (175) is adapted for navigation by means of active local radio beacons using Ultra Wide Band, UWB.

10. The robotic lawn mower (100) according to any one of the previous claims, wherein the robotic lawn mower (100) comprises at least one environment detection device (170, 171, 173) adapted to detect objects, where said environment detection device (170, 171, 173) comprises at least one of
- a radar transceiver (170, 171),
- a camera device,
- an ultrasonic device,
- a Lidar device, and/or
- a boundary wire sensor (173).

11. A method for controlling a robotic lawn mower (100) having a first end portion (101) facing a forward travelling direction (F) and a second end portion (102) facing a rearward travelling direction (R), wherein, when the robotic lawn mower (100) is performing grass cutting in the forward direction (F) in a first cutting lane (208A) having a first main lane extension (L_{A}) in an operation area (610), and shall change cutting lanes to a second cutting lane (208B) that has a second main lane extension (L_{B}) and runs adjacent to the first cutting lane (208A), the method comprises
controlling (S100) the robotic lawn mower (100) to turn such that the second end portion (102) faces the second cutting lane (208B) to a larger extent than the first end portion (101);
controlling (S200) the robotic lawn mower (100) to move in the rearward travelling direction (R), towards the second cutting lane (208B);
controlling (S300) the robotic lawn mower (100) to be positioned to perform grass cutting in the forward travelling direction (F) in the second cutting lane (208B); and
controlling (S400) the robotic lawn mower (100) to perform grass cutting in the forward travelling direction (F) in the second cutting lane (208B);
where the cutting lanes (208A, 208B) have a first inclination (α) in a direction perpendicular to the main lane extensions (L_{A}, L_{B}) and a second inclination (β) along the main lane extensions (L_{A}, L_{B}), which second inclination (β) falls below the first inclination (α), and where the second cutting lane (208B) runs below the first cutting lane (208A).

12. The method according to claim 11, wherein controlling (S100) the robotic lawn mower (100) to turn such that the second end portion (102) faces the second cutting lane (208B) to a larger extent than the first end portion (101) comprises
controlling (S110) the robotic lawn mower (100) to continue moving in the forward travelling direction (F) and at the same time to turn away from the first cutting lane (208A) and the second cutting lane (208B).

13. The method according to claim 11, wherein controlling (S100) the robotic lawn mower (100) to turn such that the second end portion (102) faces the second cutting lane (208B) to a larger extent than the first end portion (101) comprises
controlling (S120) the robotic lawn mower (100) to perform a rotational movement (R₁, R₂) such that the first end portion (101) turns away from the second cutting lane (208B).

14. The method according to any one of the claims 12 or 13, wherein the method comprises controlling (S300) the robotic lawn mower (100) to be positioned to perform grass cutting in the forward travelling direction (F) in the second cutting lane (208B) by
controlling (S310) the robotic lawn mower (100) to continue moving in the rearward travelling direction (R) and either
controlling (S311) the robotic lawn mower (100) to turn at the same time such that the robotic lawn mower (100) is positioned to perform grass cutting in the forward travelling direction (F) in the second cutting lane (208B), or
when reaching the second cutting lane (208B), controlling (S312) the robotic lawn mower (100) to perform a rotational movement (R₃) such that the first end portion (101) faces the second cutting lane (208B) and such that the robotic lawn mower (100) is positioned to perform grass cutting in the forward travelling direction (F) in the second cutting lane (208B), or
when having passed the second cutting lane (208B), controlling (S313) the robotic lawn mower (100) to move in the forward travelling direction (F) and to turn at the same time such that the robotic lawn mower (100) is positioned to perform grass cutting in the forward travelling direction (F) in the second cutting lane (208B).

15. A control unit arrangement (110) adapted to execute the method according to any one of the claims 11-14.

16. A computer program product (400) comprising computer executable instructions (410) stored on media (420) to execute the method according to any one of the claims 11-14.
